# EUROPÄISCHE PATENTSCHRIFT

(11) **EP 2 195 568 B1**
(45) Veröffentlichungstag und Bekanntmachung des Hinweises auf die Patenterteilung: **28.08.2013**
(21) Anmeldenummer: 08834118.5
(22) Anmeldetag: 18.09.2008
(51) Int. Cl.: F16L 55/48

(54) **VORRICHTUNG UND VERFAHREN ZUR ÜBERWACHUNG EINES WARTUNGSGERÄTS**
DEVICE AND METHOD FOR MONITORING A MAINTENANCE UNIT
DISPOSITIF ET PROCÉDÉ DE SURVEILLANCE D'UN APPAREIL D'ENTRETIEN

(30) Priorität: 25.09.2007 DE 102007045936
(43) Veröffentlichungstag der Anmeldung: 16.06.2010
(73) Patentinhaber: Rosen Swiss AG, 6370 Stans (CH)
(72) Erfinder: ROSEN, Hermann, CH-6047 Kastanienbaum (Horw LO) (CH)
(74) Vertreter: Wischmeyer, André
(86) Internationale Anmeldenummer: PCT/EP2008/007787
(87) Internationale Veröffentlichungsnummer: WO 2009/040043

(56) Entgegenhaltungen:
- DE-A1- 10 338 952
- US-B1- 6 816 110

## Beschreibung

Die vorliegende Erfindung betrifft ein Verfahren zur Überwachung eines in einer Pipeline bewegten Wartungsgerätes, beispielsweise eines Reinigungsmolchs, wobei ein aufgrund des vorbeibewegten Wartungsgerätes von einer ersten Empfangs- und Sendeeinheit erzeugtes Zustandsdatensignal an zumindest eine von der ersten in Abstand ebenfalls an oder entlang einer Pipeline angeordnete weitere Empfangsund Sendeeinheit übertragen wird. Weiterhin betrifft die Erfindung eine Vorrichtung, die insbesondere zur Durchführung eines solchen Verfahrens ausgebildet ist und die zumindest zwei neben oder an einer Pipeline beabstandet anzuordnende Empfangsund Sendeeinheiten zur Erzeugung und Übertragung eines aufgrund eines in einer Pipeline bewegten Wartungsgerätes erzeugten Zustandsdatensignals umfasst.

Bekannte Vorrichtungen zur Überwachung eines in einer Pipeline über große Entfernungen bewegten Wartungsgerätes bestehen aus an oder bevorzugt neben einer Pipeline angeordneten Empfangs- und Sendeeinheiten, die bei einer Vorbeibewegung eines mittels eines Fluid in der Pipeline mitbewegten Wartungsgerätes ein Zustandsdatensignal empfangen und/oder erzeugen und an eine Kontrollstelle weiterleiten. Aufgrund der großen Entfernungen sind die Wartungsgeräte über lange Zeit in der Pipeline und es besteht der Bedarf, das Voranschreiten dieser Wartungsgeräte in der Pipeline besser abschätzen zu können, beispielsweise um Wartungspersonal an den Entnahmestationen für die Wartungsgeräte zeitlich besser disponieren zu können. Gleichzeitig soll der bauliche Aufwand für ein solches Überwachungssystem möglichst gering gehalten werden.

Die US-B1-6816110 zeigt die Merkmale des Oberbegriffs der Ansprüche 1 und 10.

Es ist daher Aufgabe der vorliegenden Erfindung, ein herkömmliches Verfahren zur Überwachung eines in einer Pipeline bewegten Wartungsgerätes und eine Vorrichtung, die insbesondere für ein solches Verfahren verwendet werden kann und zumindest zwei Empfangs- und Sendeeinheiten aufweist, zu verbessern.

Die Aufgabe wird gelöst durch ein Verfahren gemäß Anspruch 1 sowie eine Vorrichtung gemäß Anspruch 10.

Das Zustandsdatensignal wird von einer ersten Empfangs- und Sendeeinheit in dem Moment aufgenommen, in dem das Wartungsgerät, beispielsweise ein in einer Pipeline von dem in der Pipeline vorhandenen Fluid bewegter Reinigungsmolch, in die Nähe der Empfangs- und Sendeeinheit bzw. einer Sensoreinheit dieser Empfangsund Sensoreinheit gelangt. Die Empfangs- und Sendeeinheit weist Mittel auf, das Zustandsdatensignal, beispielsweise eine einfache Information über das Vorhandensein und gegebenenfalls zusätzlich einen Status des Wartungsgerätes, mit einer exakten Lokalisierungsangabe zu versehen. Diese Lokalisierungsangabe kann beispielsweise aus einer von einem internen Zeitgeber vorgegebenen Zeit sowie dem vorher festgelegten Ort der Empfangs- und Sendeeinheit bestehen. Auch andere Codierungen für insbesondere Ort und Zeit sind denkbar.

Das Zustandsdatensignal wird von der ersten Empfangs- und Sendeeinheit über zumindest eine weitere Empfangs- und Sendeeinheit solange (von Empfangs- und Sendeeinheit zu Empfangs- und Sendeeinheit) in Richtung einer Schnittstelleneinheit weitergeleitet, bis es dort aufgenommen werden kann. An der Schnittstelleneinheit wird das Datensignal zur Auswertung der aus dem Zustandsdatensignal entnehmbaren Informationen in Quasi-Realzeit in ein SCADA (Supervisory Control and Data Acquisition)-System eingespeist.. Unter einem SCADA-System wird hierbei allgemein ein Auswerte- und Kontrollsystem für die Pipeline verstanden. Z.B. kann es sich hierbei um ein System handeln, welches einen Zugriff auf die Zustandsdaten über das Internet ermöglicht. Beispielsweise können die aus dem Zustandsdatensignal gewonnenen Informationen oder das Zustandsdatensignal selbst an eine Kontrollstelle des SCADA-Systems weitergeleitet werden, an der zur Kontrolle des Wartungsgerätes und der Pipeline vorgesehnes Personal unmittelbar über den Zustand des Wartungsgerätes informiert. Die Kontrollstelle kann hierbei am Ort der Schnittstelleneinheit oder auch an einem entfernt von der Pipeline liegenden Ort positioniert sein. Aus den Zustandsdaten, die nacheinander und aufgrund der Vorbeibewegung des Wartungsgerät von den jeweiligen Empfangs- und Sendeeinheiten erzeugt werden, lässt sich vorzugsweise dessen Ankunftszeit an einer Entnahmestation und dessen Geschwindigkeit abschätzen.

Anhand der Zustandsdateninformationen, die mit der exakten Lokalisierungsangabe verknüpft sind, kann ein über ein eigenes Zählwerk wie beispielsweise ein Räderwerk verfügendes Wartungsgerät im Nachhinein abgeglichen werden. Eine im Verlaufe des Wartungsinterwalls während der Wartung entstehende Drift der eigenen Daten des Wartungsgerätes lässt sich auf diese Weise aus den Daten entfernen.

Vorzugsweise wird das Zustandsdatensignal von der Empfangs- und Sendeeinheit mit einem Orts- und/oder Zeitsignal eines globalen Positionierungssystems als Lokalisierungsangabe versehen, welches ständig verfügbar ist. Zusätzlich zu bekannten GPS-Signalen können hierzu auch andere, alternative Navigationssignale, die in den entsprechenden Bereichen der Pipeline ausgestrahlt werden können, verwendet werden.

Vorzugsweise wird die Lokalisierungsangabe nur bei oder nach Erfassung des Zustanddatensignals von einer die Lokalisierungsangabe bereitstellenden Quelle empfangen und in der Empfangs- und Sendeeinheit erzeugt, um eine möglichst energiesparende Betriebsweise der Empfangs- und Sendeeinheit zu ermöglichen.

Die Empfangs- und Sendeeinheit kann hierbei insbesondere für Zeiten, in denen keine Energie in Form von Solarstrom zur Verfügung steht, mit einem wiederauflad-baren Energiespeicher, der beispielsweise tagsüber über ein Solarpanel geladen wird, versehen sein.

Vorteilhafterweise ist das Zustandsdatensignal von der ersten Empfangs- und Sendeeinheit mit einer Information über den Ursprung des Zustandsdatensignals versehen. Dem Zustandsdatensignal wird hierbei eine eindeutige Kennnummer zugeordnet, so dass anhand von entsprechenden, vorzugsweise elektronischen Filtermitteln der jeweiligen weiteren Empfangs- und Sendeeinheiten entschieden werden kann, das Zustandssignal nur zu jeweils einer vorgebbaren Schnittstelleneinheit weiter zu senden. Das Zustandsdatensignal wird so in eine Richtung entlang der Pipeline weiter transportiert, wodurch der Weg, den das Zustandsdatensignal über die jeweiligen Empfangs- und Sendeeinheiten in Richtung der Schnittstelleneinheit nimmt, vorgegeben wird.

Alternativ oder ergänzend kann das Zustanddatensignal mit einer Richtungsvorgabe zum Übertragen des Signals entlang einer gewünschten Richtung entlang der Pipeline versehen werden, beispielsweise durch Verwendung einer Empfängerkennung zum Versenden in Richtung der nächstgelegenen Schnittstelleneinheit. Das Zustandsdatensignal wird dann in diejenige Richtung weiter transportiert, in der die geplante Schnittstelleneinheit angeordnet ist. Auch hierüber ist wiederum der Weg, dem die Zustandsdaten zur Auswerteeinheit oder einer anderen Kontrollstelle nehmen, vorgebbar. Aus einer Kombination von Absender- oder Ursprungsdaten und Empfängerkennung, wobei als Empfänger eine Schnittstelleneinheit oder eine in Richtung der geplanten Schnittstelleneinheit liegende Empfangs- und Sendeeinheit verwendbar ist, kann letztere ebenfalls entscheiden, inwieweit das Zustandsdatensignal weiterzusenden ist.

Besonders vorteilhaft ist die zeitverzögerte, zweifache Sendung eines Zustandsdatensignals, mit dem ein hinsichtlich der Daten des Wartungsgeräts redundanter Datensatz erzeugt wird, um das System ausfallsicherer zu machen. Insbesondere in Kombination mit einer Richtungsvorgabe zum Übertragen des Signals in eine gewünschte Richtung und bei zweifacher Sendung des Signals in zwei verschiedene Richtungen entlang der Pipeline erhöht sich die Ausfallsicherheit des Systems beträchtlich. Sollte eine Richtung zum Übertragen des Zustandsdatensignal aufgrund von möglicherweise nicht funktionierenden Empfangs- und Sendeeinheiten, die in Abständen von mehreren Kilometern hinweg aufgestellt werden, blockiert sein, kann das Signal über den weiteren Weg dennoch zu der gewünschten Schnittstelleneinheit gelangen.

Vorzugsweise wird ein erstes Zustandsdatensignal von einer Empfangs- und Sendeeinheit aufgenommen, von diesem mit einer exakten Lokalisierungsangabe versehen und anschließend mit einer ersten Kennung in eine Richtung versendet. Anschließend wird dasselbe Signal mit einer weiteren, anderen Empfangskennung zur Aufnahme des Signals von in eine andere Richtung gelegenen Empfangs- und Sendeeinheiten an diese versendet. Wird nun dieses zweite Signal von in einer falschen Richtung liegenden Empfangs- und Sendeeinheit aufgenommen, so sendet diese das Signal nicht weiter. Auf gleiche Weise wird ein Transport mit dem ersten Signal in die Richtung des zweiten Signals vermieden.

Um möglichst wenig Einfluss auf im Boden liegende oder auf dem Boden liegende Pipelines auszuüben, wird das von dem Wartungsgerät ausgehende Zustandsdatensignal an der jeweiligen Empfangs- und Sendeeinheit bevorzugt berührungslos aufgenommen.

Vorzugsweise werden aus den Zustandsdaten, die jeweils von dem an den Empfangs- und Sendeeinheiten vorbeibewegten Wartungsgerät erzeugt werden, Ankunftszeiten des Wartungsgerätes, Geschwindigkeiten und/oder Referenzdaten zum Synchronisieren der im Wartungsgerät aufgenommenen Daten, vorzugsweise nach einer Inspektion berechnet. Mittels dieser Daten ist die Steuerung einer Pipeline, deren Durchflussgeschwindigkeit beim Einsatz eines Wartungsgerätes reduziert werden muss, verbessert planbar.

Die Aufgabe wird ebenfalls gelöst durch eine Vorrichtung nach dem Oberbegriff des Anspruchs 10, die sich dadurch auszeichnet, dass die erste Empfangs- und Sendeeinheit zur Ergänzung des Zustandsdatensignals mit einer exakten Lokalisierungsangabe und die zumindest eine weitere Empfangs- und Sendeeinheit zur Weiterleitung des von der ersten Empfangs- und Sendeeinheit erzeugten Zustandsdatensignals in Richtung einer Schnittstelleneinheit der Vorrichtung zur Einspeisung des Zustanddatensignals in ein SCADA-System ausgebildet ist. Eine solche Vorrichtung, die mit einer Mehrzahl von Empfangs- und Sendeeinheiten entlang einer Pipeline aufbaubar ist und jeweils nur abschnittsweise in bestehende SCADA-Systeme eingreift, ist deutlich weniger störanfällig als eine Vorrichtung, bei der das Zustandsdatensignal an jeder Empfangs- und Sendeeinheit entlang der Pipeline in das ebenfalls entlang der Pipeline verlaufende SCADA-System eingespeist wird. Während einerseits der bauliche Aufwand verringert wird, ist andererseits die zentrale Erfassung des Signals an einer ohnehin vorhandenen Station möglich.

Vorzugsweise ist die Empfangs- und Sendeeinheit mit einem Solarpanel zur Energieversorgung versehen, welches an einem neben der Pipeline im Boden steckenden oder anders befestigten Stab angeordnet ist. Alternativ oder ergänzend ist auch eine andere andere Energieversorgung zur Herstellung einer energieautarken Empfangs- und Sendeeinheit wie beispielsweise mittels Erdwärme denkbar. Durch eine wieder aufladbare Batterie ist auch eine Stromversorgung für während der Nachtstunden durchgeführte Wartungen der Pipeline möglich.

Die Empfangs- und Sendeeinheit umfasst vorzugsweise eine Aufnahmevorrichtung für Signale eines globalen Positionierungssystems, beispielsweise eine GPS-Empfangseinheit.

Darüber hinaus weist die Vorrichtung für eine Wartung vorzugsweise mindestens ein Service-Interface auf, besonders bevorzugt umfasst jedoch jede Empfangs- und Sendeeinheit ein entsprechendes Interface, mit dem die Funktionstüchtigkeit der Einheit überprüft werden und bei Aufbau des System Mittel der Empfangs- und Sendeeinheit entsprechend dem gewünschten Übermittlungsverhalten der Einheit programmiert werden können.

Vorteilhafterweise weisen die Empfangs- und Sendeeinheiten Mittel zur richtungsgebundenen Weiterleitung des Zustandsdatensignals auf. So lässt sich der Sendevorgang des Zustandsdatensignals und der von diesem zurückgelegte Weg optimieren. Entsprechende Filtermittel können beispielsweise durch mikroprozessorgesteuerte Analysen des Zustandsdatensignals und die entsprechende Herausfilterung der gewünschten Kennung, von wo und in welche Richtung das Signal gesendet werden soll, Vorgaben für die Weitersendung des Zustandsdatensignals generieren.

Weitere Vorteile und Einzelheiten der Erfindung lassen sich der nachfolgenden Figurenbeschreibung entnehmen.

In den schematisch dargestellten Abbildungen in den Figuren zeigt:
- Fig. 1: eine Empfangs- und Sendeeinheit einer erfindungsgemäßen Vorrichtung,
- Fig. 2: eine erfindungsgemäße Vorrichtung.

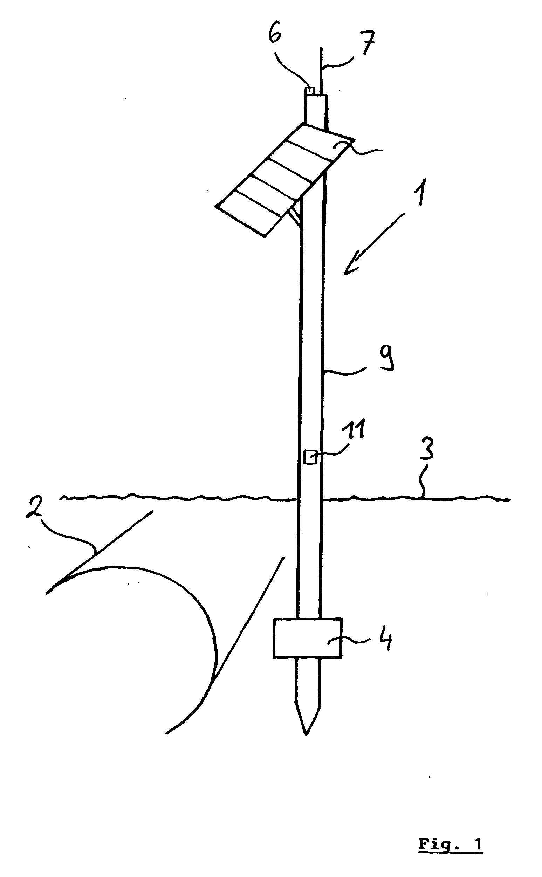

Fig. 1 zeigt eine Empfangs- und Sendeeinheit 1, die neben einer nur angedeuteten Pipeline 2 unterhalb einer Oberfläche 3 im Boden angeordnet ist. Aufgrund eines durch die Pipeline 2 hindurchgeführten Wartungsgeräts, welches in den Bereich einer Sensoreinheit 4 der Empfangs- und Sendeeinheit 1 gelangt, wird ein Zustandsdatensignal erzeugt. Dieses Zustandsdatensignal wird entweder direkt von dem Wartungsgerät ausgesendet oder passiv von diesem erzeugt, wobei die Sensoreinheit 4 die Vorbeibewegung des Gerätes registriert.

Eine nicht näher dargestellte Kontrolleinheit der Empfangs- und Sendeeinheit veranlasst die gleichzeitige Erfassung von über eine GPS-Antenne 6 aufgenommenen Ort- und Zeitangaben und deren Verknüpfung mit dem Zustandsdatensignal. Das kombinierte Signal wird nun über eine Antenne 7 ausgesendet. Alternativ könnte die zeitliche Synchronisation der Zustandsdatensignale auch über ein von dem SCADA-System bereitsgestelltes und gegebenfalls an die einzelnen Empfangs- und Sendeeinheiten 1 übermitteltes Zeitsignal erfolgen.

Die Energieversorgung der Empfangs- und Sendeeinheit 1 wird mittels eines Solarpanels 8 gewährleistet, welches an dem im Boden steckenden Masten 9 der Empfangs- und Sendeeinheit 1 angeordnet ist. Eine leicht zugängliche Service-Schnittstelle 11 dient der Initialisierung und Überprüfung so wie gegebenenfalls Instandhaltung der Empfangs- und Sendeeinheit. Beispielsweise ist über diese Service-Schnittstelle ein interner Zeitgeber oder auch eine Positionsangabe festlegbar, die in einem entsprechenden Speicher der Einheit 1 abgelegt wird und bei Aussendung des Zustandsdatensignals mit übermittelt wird.

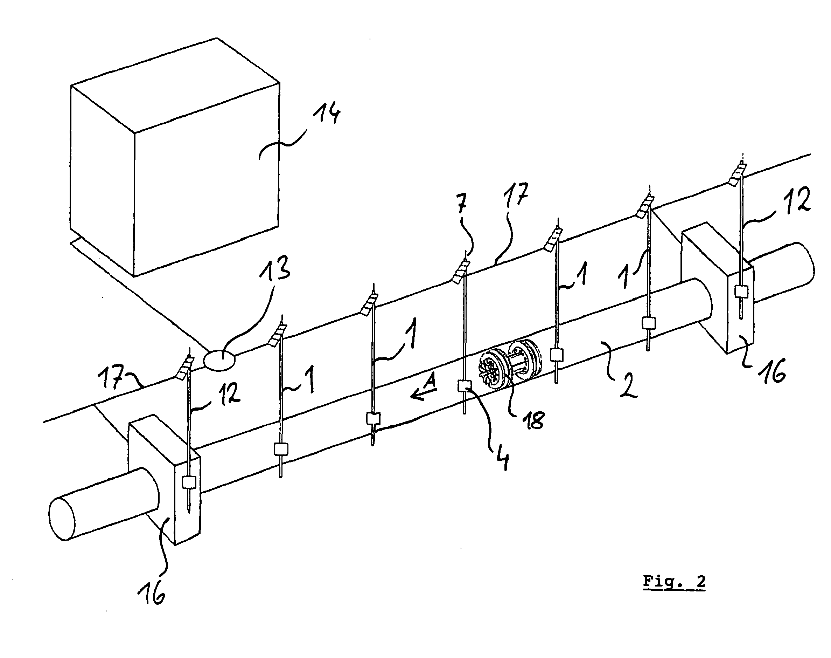

Ein Ausführungsbeispiel einer erfindungsgemäßen Vorrichtung gemäß Fig. 2 umfasst mehrere neben einer Pipeline 2 angeordnete Empfangs- und Sendeeinheiten 1 sowie zwei zumindest als Empfangseinheit ausgebildete Schnittstelleneinheiten 12. Die Schnittstelleneinheiten 12 stellen jeweils eine Verbindung zu einem SCADA-System 13 her, mit dem ausgehend von einer Kontrollstelle 14 die Überwachung der jeweiligen, an der Pipeline angeordneten Terminaleinheiten 16 sowie der Pipeline insgesamt möglich ist.

Die erfindungsgemäße Vorrichtung ist an den Terminaleinheiten 16 mittels der Schnittstelleneinheiten 12 mit dem SCADA-System 13 verbunden. Die Empfangs-und Sendeeinheiten 1 sind nicht mit den Leitungen 17 des SCADA-Systems 13 verbunden. Diese verlaufen vielmehr unabhängig von der erfindungsgemäßen Vorrichtung entlang der Pipeline 2.

Das Wartungsgerät 18, in diesem Fall ein Reinigungsmolch, wird in Fortbewegungsrichtung A durch die Pipeline 2 geführt. Auf Höhe der in der Fig. 2 in Richtung A und ausgehend vom Wartungsgerät 18 nächstgelegenen Sensoreinheit 4 wird ein Zustandsdatensignal erzeugt. Mittels der Radioantenne 7 der Empfangs- und Sendeeinheit 1 wird das Zustandsdatensignal unter Hinzufügung der vom GPS-Empfänger 6 aufgenommenen Lokalisierungsangabe in Richtung A zu der nächstgelegenen Terminaleinheit und der daran angeordneten Schnittstelleneinheit 12 gesendet. Hierzu erhält das Signal eine Empfängerkennung, die die Richtung des Signals entlang der Pipeline (in Richtung A) vorgibt. Die nächste in Richtung A gelegene Empfangs- und Sendeeinheit 1 erhält dieses Signal und löst nun wiederum ihrerseits die Weitergabe des Signals an die nächste Empfangseinheit aus. Dieser Prozess wiederholt sich so lange, bis dass das mit einer eindeutigen Empfängerkennung versehene Signal bei der Schnittstelleneinheit 12, die in Richtung A ausgehend von dem Wartungsgerät 18 gelegen ist, angelangt ist.

Derselbe Vorgang findet mit einem weiteren Datensignal zeitverzögert und mit einer ensprechend anderen Kennung in die andere Richtung (entgegen der Richtung A) entlang der Pipeline zur dortigen Empfangs- und Schnittstelleneinheit 12 statt. Auf diese Weise werden die entgegen der Vorbewegungsrichtung A des Wartungsgeräts gelegenen Empfangs- und Sendeeinheiten 1 das Signal bis zu der Schnittstelleneinheit 12 der entsprechenden Terminaleinheit 16 weiter senden. An den beiden Terminaleinheiten 16 wird das Zustandsdatensignal über die Schnittstelleneinheiten 12 in das SCADA-System 13 eingespeist, woraufhin sich die Zustandsdaten in der Kontrollstelle 14 anzeigen lassen.

## Patentansprüche

1. Verfahren zur Überwachung eines in einer Pipeline (2) bewegten Wartungsgerät (18), wobei ein aufgrund eines vorbeibewegten Wartungsgerät (18) von einer ersten Empfangs- und Sendeeinheit (1) erzeugtes Zustandsdatensignal an zumindest eine weitere in Abstand entlang oder an einer Pipeline (2) angeordnete Empfangs- und Sendeeinheit (1) übertragen wird, **dadurch gekennzeichnet, dass** das Zustandsdatensignal von der ersten Empfangs- und Sendeeinheit (1) mit einer exakten Lokalisierungsangabe versehen wird, über die zumindest eine weitere Empfangs- und Sendeeinheit (1) in Richtung einer Schnittstelleneinheit (12) weitergeleitet und dort zur Auswertung der aus dem Zustandsdatensignal entnehmbaren Informationen in Quasi-Realzeit in ein SCADA-System eingespeist wird.

2. Verfahren nach Anspruch 1, **dadurch gekennzeichnet, dass** das Zustandsdatensignal von der weiteren Empfangs- und Sendeeinheit (1) aufgenommen und verändert in Richtung der Schnittstelleneinheit (12) weiter gesendet wird.

3. Verfahren nach Anspruch 1 oder 2, **dadurch gekennzeichnet, dass** das Zustandsdatensignal von der Empfangs- und Sendeeinheit (1) mit einem Orts- und/oder Zeitsignal eines globalen Positionierungssystems als Lokalisierungsangabe versehen wird.

4. Verfahren nach einem der vorherigen Ansprüche, **dadurch gekennzeichnet, dass** die Lokalisierungsangabe nur bei oder unmittelbar nach Erfassung des Zustandsdatensignals erzeugt wird.

5. Verfahren nach einem der vorherigen Ansprüche, **dadurch gekennzeichnet, dass** das Zustandsdatensignal von der ersten Empfangs- und Sendeeinheit (1) mit einer Information über seinen Ursprung versehen wird.

6. Verfahren nach einem der vorherigen Ansprüche, **dadurch gekennzeichnet, dass** das Zustandsdatensignal mit einer Richtungsvorgabe zum Übertragen des Zustandsdatensignals entlang einer gewünschten Richtung entlang der Pipeline (2) versehen wird.

7. Verfahren nach einem der vorherigen Ansprüche, **dadurch gekennzeichnet, dass** das Zustandsdatensignal zeitverzögert zumindest zweifach versendet wird.

8. Verfahren nach einem der vorherigen Ansprüche, **dadurch gekennzeichnet, dass** die Zustandsdaten berührungslos aufgenommen werden.

9. Verfahren nach einem der vorherigen Ansprüche, **dadurch gekennzeichnet, dass** aus den Zustandsdaten der von mehreren Empfangs- und Sendeeinheiten (1) erzeugten Zustandsdatensignale Ankunftszeiten des Wartungssystems, Geschwindigkeiten und/oder Referenzdaten zum Abgleichen der im Wartungssystem aufgenommenen Daten, vorzugsweise nach einer Inspektion, berechnet werden.

10. Vorrichtung, insbesondere zur Durchführung eines Verfahrens nach einem der vorhergehenden Ansprüche, mit zumindest zwei zueinander in Abstand und neben oder an einer Pipeline (2) anzuordnenden Empfangs- und Sendeeinheiten (1) zur Erzeugung und Übertragung eines Zustandsdatensignals eines in einer Pipeline (2) bewegten Wartungssystems (18), **dadurch gekennzeichnet, dass** die Vorrichtung eine Schnittstelleneinheit (12) für ein SCADA-System aufweist und die erste Empfangs- und Sendeeinheit (1) zur Erzeugung und Übertragung eines mit einer exakten Lokalisierungsangabe versehenen Zustandsdatensignals und die zumindest eine weitere Empfangs und Sendeeinheit (1) zur Weiterleitung des von der ersten Empfangs- und Sendeeinheit (1) abgegebenen Zustandsdatensignals in Richtung der Schnittstelleneinheit (12) der Vorrichtung zur Einspeisung des Zustandsdatensignals in ein SCADA-System (13) ausgebildet ist.

11. Vorrichtung nach Anspruch 10, **dadurch gekennzeichnet, dass** die Empfangs- und Sendeeinheiten (1) jeweils einen Energiespeicher aufweisen.

12. Vorrichtung nach Anspruch 11, **dadurch gekennzeichnet, dass** der Energiespeicher wieder aufladbar ausgebildet ist.

13. Vorrichtung nach einem der Ansprüche 10 bis 12, **dadurch gekennzeichnet, dass** die Empfangs- und Sendeeinheiten (1) ein Solarpanel (8) oder eine andere autarke Energieversorgung aufweist.

14. Vorrichtung nach einem der Ansprüche 10 bis 13, **dadurch gekennzeichnet, dass** die Empfangs und Sendeeinheiten (1) eine Aufnahmevorrichtung (6) für Signale eines globalen Positionierungssystems aufweisen.

15. Vorrichtung nach einem der Ansprüche 10 bis 14, **dadurch gekennzeichnet, dass** die Vorrichtung eine Service-Schnittstelle (11) umfasst.

16. Vorrichtung nach einem der Ansprüche 10 bis 15, **dadurch gekennzeichnet, dass** die Empfangs- und Sendeeinheiten Mittel zur richtungsgebundenen Weiterleitung des Zustandsdatensignals aufweisen.

## Claims

1. Method for monitoring a maintenance device (18) that is moved in a pipeline (2), wherein a status data signal generated by a first reception and transmission unit (1) on the basis of a maintenance device (18) moving past it is transmitted to at least one further reception and transmission unit (1) disposed at a distance along or on a pipeline (2), **characterized in that** the status data signal is provided with precise localization information by the first reception and transmission unit (1), passed on in the direction of an interface unit (12) by way of the at least one further reception and transmission unit (1), and there information that can be derived from the status data signal is fed into a SCADA system in quasi real time.

2. Method according to claim 1, **characterized in that** the status data signal is picked up by the further reception and transmission unit (1) and transmitted further in the direction of the interface unit (12) in modified manner.

3. Method according to claim 1 or 2, **characterized in that** the status data signal is provided with a location and/or time signal of a global positioning system as the localization information by the reception and transmission unit (1).

4. Method according to one of the preceding claims, **characterized in that** the localization information is generated only during or immediately after detection of the status data signal.

5. Method according to one of the preceding claims, **characterized in that** the status data signal is provided with information concerning its origin by the first reception and transmission unit (1).

6. Method according to one of the preceding claims, **characterized in that** the status data signal is provided with direction information for transmission of the status data signal along a desired direction along the pipeline (2).

7. Method according to one of the preceding claims, **characterized in that** the status data signal is transmitted at least twice, with a time delay.

8. Method according to one of the preceding claims, **characterized in that** the status data are picked up In contact-free manner.

9. Method according to one of the preceding claims, **characterized in that** arrival times of the maintenance system, velocities and/or reference data for reconciliation of the data recorded in the maintenance system, preferably after an inspection, are calculated from the status data of the status data signals generated by multiple reception and transmission units (1).

10. Apparatus, particularly for implementation of a method according to one of the preceding claims, having at least two reception and transmission units (1) disposed at a distance from one another and next to or on a pipeline (2), for generation and transmission of a status data signal of a maintenance device (18) that is moved in a pipeline (2), **characterized in that** the apparatus has an interface unit (12) for a SCADA system and that the first reception and transmission unit (1) is configured for generating a status data signal provided with precise localization information, and that the at least one further reception and transmission unit (1) is configured for passing on the status data signal output by the first reception and transmission unit (1), in the direction of the interface unit (12), and for feeding the status data signal into a SCADA system.

11. Apparatus according to claim 10, **characterized in that** the reception and transmission units (1) have an energy storage device, in each instance.

12. Apparatus according to claim 11, **characterized in that** the energy storage device is configured to be rechargeable.

13. Apparatus according to one of claims 10 to 12, **characterized in that** the reception and transmission unit (1) has a solar panel (8) or another autarchic energy supply device.

14. Apparatus according to one of claims 10 to 13, **characterized in that** the reception and transmission units (1) have a pick-up apparatus (6) for signals of a global positioning system.

15. Apparatus according to one of claims 10 to 14, **characterized in that** the apparatus comprises a service interface (11).

16. Apparatus according to one of claims 10 to 15, **characterized in that** the reception and transmission units have means for passing the status data signal on in directional manner.

## Revendications

1. Procédé de surveillance d'un appareil de maintenance (18) en mouvement dans un pipeline (2), un signal de données d'état généré par une première unité d'émission et de réception (1) suite au passage devant d'un appareil de maintenance (18) étant transmis à au moins une autre unité d'émission et de réception (1) disposée à distance le long ou sur un pipeline (2), **caractérisé en ce que** le signal de données d'état de la première unité d'émission et de réception (1) est pourvu d'une indication de localisation exacte, est transmis par l'au moins une autre unité d'émission et de réception (1) en direction d'une unité d'interface (12) et y est injecté pour l'évaluation des informations prélevables du signal de données d'état en temps quasiment réel dans un système SCADA.

2. Procédé selon la revendication 1, **caractérisé en ce que** le signal de données d'état est reçu et modifié par l'autre unité d'émission et de réception (1) puis renvoyé en direction de l'unité d'interface (12).

3. Procédé selon la revendication 1 ou 2, **caractérisé en ce que** le signal de données d'état de l'unité d'émission et de réception (1) est pourvu d'un signal local et/ou temporel d'un système de positionnement global comme indication de localisation.

4. Procédé selon l'une quelconque des revendications précédentes, **caractérisé en ce que** l'indication de localisation n'est générée que lors ou peu après la détection du signal de données d'état.

5. Procédé selon l'une quelconque des revendications précédentes, **caractérisé en ce que** le signal de données d'état de la première unité d'émission et de réception (1) est pourvu d'une information sur son origine.

6. Procédé selon l'une quelconque des revendications précédentes, **caractérisé en ce que** le signal de données d'état est pourvu d'une prescription de direction pour la transmission du signal de données d'état le long d'un sens souhaité le long du pipeline (2).

7. Procédé selon l'une quelconque des revendications précédentes, **caractérisé en ce que** le signal de données d'état est envoyé au moins en double en décalage.

8. Procédé selon l'une quelconque des revendications précédentes, **caractérisé en ce que** les données d'état sont reçues sans contact.

9. Procédé selon l'une quelconque des revendications précédentes, **caractérisé en ce que** des heures d'arrivée du signal de maintenance, des vitesses et/ou des données de référence sont calculées à partir des données d'état des signaux de données d'état générés par plusieurs unités d'émission et de réception (1) pour l'ajustement des données reçues dans le système de maintenance, de préférence après une inspection.

10. Dispositif, en particulier pour la mise en oeuvre d'un procédé selon l'une quelconque des revendications précédentes, avec au moins deux unités d'émission et de réception (1) à disposer à distance et à côté ou sur un pipeline (2) pour la génération et la transmission d'un signal de données d'état d'un système de maintenance (18) en mouvement dans un pipeline (2), **caractérisé en ce que** le dispositif présente une unité d'interface (12) pour un système SCADA et la première unité d'émission et de réception (1) est réalisée pour la génération et la transmission d'un signal de données d'accès pourvu d'une indication de localisation exacte et l'au moins une autre unité d'émission et de réception (1) pour la transmission du signal de données d'état émis par la première unité d'émission et de réception (1) en direction de l'unité d'interface (12) du dispositif pour l'injection du signal de données d'état dans un système SCADA (13).

11. Dispositif selon la revendication 10, **caractérisé en ce que** les unités d'émission et de réception (1) présentent chacune un accumulateur d'énergie.

12. Dispositif selon la revendication 11, **caractérisé en ce que** l'accumulateur d'énergie est réalisé de manière rechargeable.

13. Dispositif selon l'une quelconque des revendications 10 à 12, **caractérisé en ce que** les unités d'émission et de réception (1) présentent un panneau solaire (8) ou une autre alimentation en énergie autarcique.

14. Dispositif selon l'une quelconque des revendications 10 à 13, **caractérisé en ce que** les unités d'émission et de réception (1) présentent un dispositif de réception (6) pour des signaux d'un système de positionnement global.

15. Dispositif selon l'une quelconque des revendications 10 à 14, **caractérisé en ce que** le dispositif comporte une interface de service (11).

16. Dispositif selon l'une quelconque des revendications 10 à 15, **caractérisé en ce que** les unités d'émission et de réception présentent des moyens pour la transmission liée à la direction du signal de données d'état.
